# EUROPEAN PATENT SPECIFICATION

(11) **EP 2 034 449 B1**
(45) Date of publication and mention of the grant of the patent: **22.08.2018**
(21) Application number: 07745519.4
(22) Date of filing: 19.06.2007
(51) Int. Cl.: G07B 15/00, G06Q 50/00

(54) **FEE COLLECTION SYSTEM, PARKING MANAGEMENT DEVICE, AND IN-VEHICLE DEVICE**
GEBÜHRENEINHOLSYSTEM, PARKVERWALTUNGSEINRICHTUNG UND EINRICHTUNG IN EINEM FAHRZEUG
SYSTÈME DE COLLECTE DE DROITS, DISPOSITIF DE GESTION DE STATIONNEMENT ET DISPOSITIF EMBARQUÉ

(30) Priority: 29.06.2006 JP 2006179786
(43) Date of publication of application: 11.03.2009
(73) Proprietor: Mitsubishi Heavy Industries, Ltd., Minato-ku Tokyo 108-8215 (JP)
(72) Inventor: KATO, Seiki, Takasago-shi, Hyogo 676-8686 (JP); MORISHITA, Keiichi, Takasago-shi, Hyogo 676-8686 (JP); OKAMOTO, Shigeo, Takasago-shi, Hyogo 676-8686 (JP); ONO, Hidekazu, Kobe-shi, Hyogo 652-8585 (JP)
(74) Representative: Henkel, Breuer & Partner
(86) International application number: PCT/JP2007/062317
(87) International publication number: WO 2008/001648

(56) References cited:
- EP-A1- 1 898 360
- WO-A1-00/11616
- WO-A1-02/066288
- WO-A2-02/063570
- JP-A- 2001 243 510
- JP-A- 2001 357 423
- JP-A- 2005 316 771
- JP-A- 2006 072 728

## Description

### Technical Field

The present invention relates to a fee collection system for automatically levying a car park fee, a car park management apparatus, and a vehicle mounted device.

### Background Art

In recent years, fee collection methods have become known where, in a car park, a car parking ticket storing the time of entry at a car park entrance is issued, and at the exit of the car park, a car parking fee calculated based on the entry time etc. stored in the car parking ticket, is settled (for example, refer to Japanese Unexamined Patent Application, Publication No. 2001-167300).

However, the above described conventional car park is provided with barriers at the entrances and exits of the car park, and it is possible to enter into the car park by raising the barrier upon receipt of a car parking ticket at the entrance, while at the exit, the barrier is raised if a car parking fee is paid, and the car park can then be left. Also, a car park is generally constructed surrounded by railings and walls etc., so that it is not possible to get in or out of the car park except by way of the entrances and exits.

In this way, with a conventional car park it is necessary to install a number of barriers etc. when constructing the car park, and there is the disadvantage that it is necessary to block off entry from the outside by enclosing the car park.

EP1898360 A1, which has been published after the priority date of the present application, discloses a system for collecting parking fees comprising a plurality of antennas and a plurality of parking spaces, wherein one of the antennas is allocated to one parking area. Additionally, a plurality of vehicle mounted devices are provided. One central computer is suitable for exchanging information with the vehicle mounted devices.

Additionally background art is disclosed in WO02/066288 A1, WO02/063570 A2 and WO00/11616 A1.

The present invention has been conceived in view of the above described problems, and an object of the invention is to provide a fee collection system, car park management apparatus, and vehicle mounted device that can do away with the need to construct barriers and enclosures, etc., and reliably levy a car parking fee.

According to the present invention the above object is a achieved by means of the combination of features according to claim 1. The dependent claims are directed to a different advantageous aspects of the invention.

According to the claimed invention, antennas are provided in correspondence with car parking regions, and when a vehicle mounted device receives an enquiry signal emitted from an antenna it is detected that the vehicle is parked in the car parking region. Further, when it is detected that a vehicle is parked, information relating to the vehicle is transmitted from the vehicle mounted device to the car park management apparatus, and so it becomes possible for the car park management apparatus to carry out management by correlating the information relating to the vehicle with the parking start time. In this way, it becomes possible to automatically levy a parking fee in accordance with usage time of a vehicle fitted with the vehicle-mounted device.

In this manner, it is possible to reliably levy a parking fee without the need for barriers and fee collection equipment at entrances and exits of a car park. Also, since there is no longer any need to enclose the parking area with railings or walls, it is possible to improve the usage environment by not giving a feeling of being closed in to users, as is the case with a conventional car park.

With the claimed invention, since the authentication information is transmitted to the vehicle mounted device, it is possible to issue an alarm to the effect that car park fee collection has been carried out normally to the surrounding area, for example, by displaying this authentication information on a display section of the vehicle mounted device.

With the claimed invention, when fee collection is carried out normally, a random number is transmitted from the car park management apparatus to the vehicle mounted devices, and this random number is also transmitted to a terminal unit together with identification information for the vehicle mounted device, which means, for example, that an attendant can easily confirm whether or not levying of a fee has been performed correctly by comparing the random number displayed on the terminal unit they are carrying with the random number displayed on the vehicle mounted devices. Also, by using an unpredictable random number as the authentication information it is possible to prevent fraudulent behavior such as displaying authentication information in advance on the vehicle mounted devices.

With the claimed invention, by displaying the random numbers in vehicle mounted devices that have received a random number, it is made possible to notify the fact that parking fees have been levied normally to the surrounding area by displaying the random number etc. At this time, in vehicle mounted devices for which levying of car parking fee is carried out normally, the same random number is displayed, and so it becomes possible to easily specify vehicle mounted devices, in other words vehicles, for which a parking fee has not been levied normally.

With this type of structure, by substantially aligning the wireless communicable regions of the antennas with car parking regions, enquiry signals transmitted from each antenna will only be received at a vehicle-mounted device parking in a car parking region corresponding to that antenna. In this way, it is possible to prevent information interference between neighboring car parking regions.

It is also possible, with the fee collection apparatus, for information exchange between the vehicle mounted devices and the car park management apparatus to be carried out via the antennas. It is also possible, with the fee collection apparatus of the above described first aspect, for information exchange between the vehicle mounted devices and the car park management apparatus to be carried out via a wide area communication network.

According to the claimed invention, since authentication information is displayed on a display section, it is made possible to issue an alarm to the surrounding area of being under the supervision of the car parking management device.

According to the claimed invention, a lighting section is flashed at a timing corresponding to the authentication information, and it is made possible to issue an alarm to the surrounding area of being under the supervision of the car park management apparatus.

Incidentally, the respective structures described above can be combined where possible.

According to the present invention, the effect is achieved of making it possible to reliably levy a car parking fee, as well' as being able to do away with installing barriers and fences etc.

### Brief Description of Drawings

Fig. 1 is a drawing showing the overall structure of a fee collection system.
Fig. 2 is a drawing for describing an area where communication is possible with an antenna unit shown in Fig. 1.
Fig. 3 is a block diagram showing the schematic structure of the antenna unit shown in Fig. 1.
Fig. 4 is a block diagram showing the schematic structure of a car parking management device shown in Fig. 1.
Fig. 5 is a block diagram showing the schematic structure of a vehicle-mounted device.
Fig. 6 is a flowchart showing a communication sequence in a fee collection system.
Fig. 7 is a drawing showing a modified example of a fee collection system.
Fig. 8 is a drawing showing the overall structure of a fee collection system.
Fig. 9 is a flowchart showing a communication sequence in a fee collection system.
Fig. 10 is a flowchart showing a communication sequence in a fee collection system.
Fig. 11 is a flowchart showing a communication sequence in a fee collection system.
Fig. 12 is a flowchart showing a communication sequence in the fee collection system.

### Explanation of Reference Signs:

- 1: car park
- 2: parking area
- 4a, 4b, 4c: antenna unit
- 3a, 3b, 3c: vehicle parking region
- 5: car park management apparatus
- 16: storage device
- 17: clock
- 18: control section
- 19: communication section
- 25: storage device
- 26: control section
- 27: communication section
- 28: display section
- 29: alarm notification section
- 30: IC card insertion section
- 35: entrance antenna unit
- 36: exit antenna unit
- 40: terminal unit
- 50a, 50b, 50c: vehicle
- A: attendant

### Best Mode for Carrying Out the Invention

A fee collection system of the present invention will be described in the following with reference to the drawings.

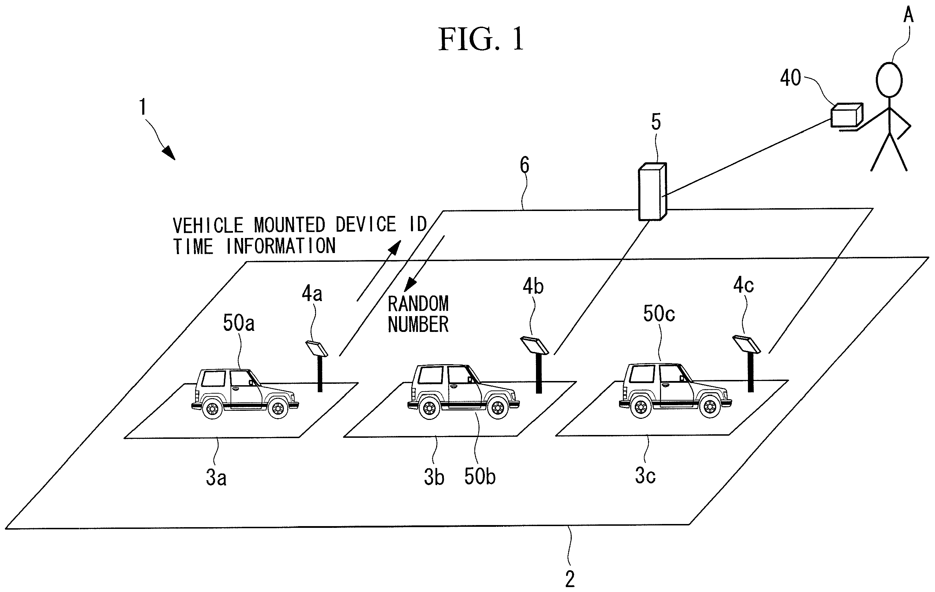

Fig. 1 is an overall structural drawing of the fee collection system.

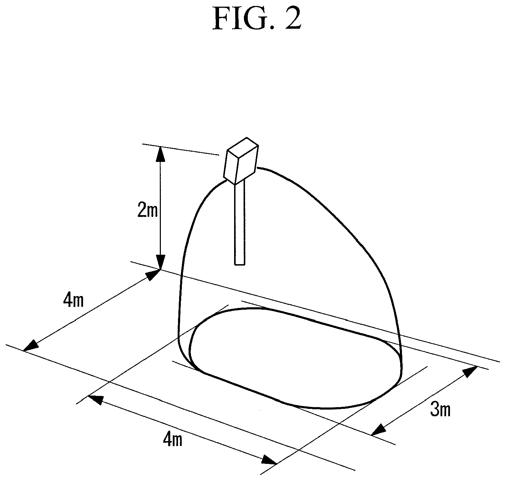

As shown in Fig. 1, a plurality of car parking regions 3a, 3b, 3c are provided in a parking area 2 of a car park 1 of this embodiment (in the following, when indicating all of the parking areas, the reference numeral "3" will be assigned, and when indicating each parking area reference numerals "3a", "3b" etc. will be assigned. The same applies to other structural elements.). Antenna units 4a, 4b, 4c, are respectively provided in each of the car parking regions 3. The antenna units 4 are attached to stanchions installed close to the vehicle parking regions 3. Also, regions where wireless communication with the antenna units 4 is possible are substantially aligned with the vehicle parking regions 3. For example, a wireless communication possible region of the antenna units 4 is substantially aligned with a parking space for a single vehicle, which is set to a length of 4 m and a width of 3 m, as shown in Fig. 2.

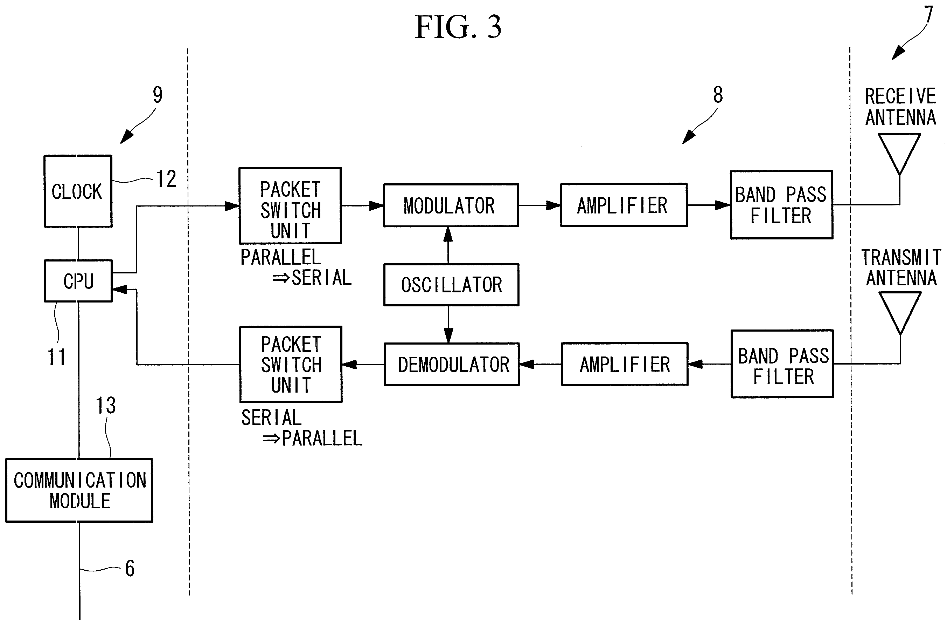

As shown in Fig. 3, each antenna unit 4 is comprised of an antenna section 7, a communication processing section 8 and a control section 9. The antenna section 7 is provided with a transmit antenna and a receive antenna. The communication processing section 8 has structural elements required to perform general communication processing, such as a band pass filter, amplifier, modulator, oscillator, packet switching unit etc. The control section 9 functions as part of a car park management apparatus 5, which will be described later, and comprises, for example, a CPU 11 and clock 12, and a communication module 13 for carrying out communication with the car park management apparatus 5 via an information transmission medium 6.

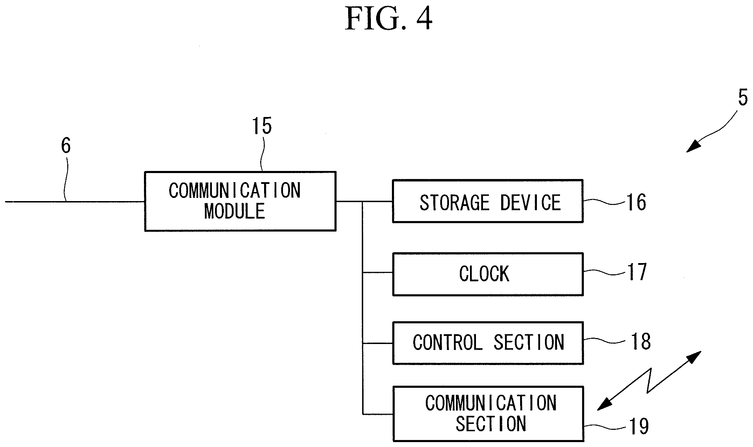

As shown in Fig. 4, the car park management apparatus 5 comprises a communication module 15 for performing communication with the antenna sections 4 via the information transmission medium 6, a storage section 16, a clock 17, a control section 18 and a communication section 19 for performing communication with a terminal unit 40 carried by an attendant A of the car park 1.

Information received from a vehicle mounted device 20 that will be described later, is stored in the storage section 16, as well as an encryption key for encrypting information, a charge table that is referenced when calculating a usage charge of the car park 1, etc. Writing of information to this storage device 16 and reading of information from the storage device 16 is carried out by the control section 18.

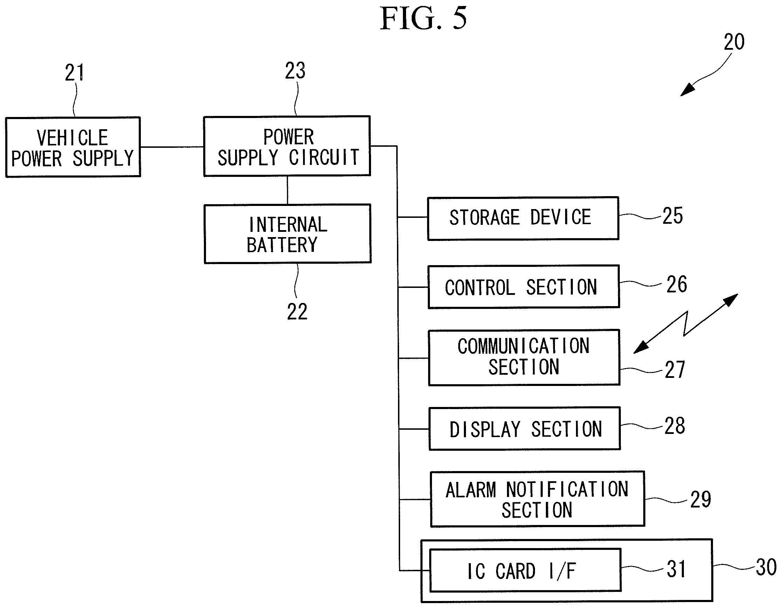

Next, a vehicle-mounted device 20 fitted in a vehicle 50 will be described. Fig. 5 is a block diagram showing the schematic structure of the vehicle-mounted device. As shown in Fig. 5, the vehicle mounted device 20 comprises, as its main structural components, a power supply circuit 23 connected to a vehicle power supply 21 and an internal battery 22, a storage device 25 for storing various information, a control section 26, a communication section 27 for carrying out communication with the antenna unit 4, a display section 28, a notification section 29 such as buzzer or LED, an IC card insertion section 30 into which an IC card is inserted, and an IC card interface 31 provided in the IC card insertion section 30.

The power supply circuit 23 mainly control a voltage supplied from the vehicle power supply 21 to a voltage adopted in the vehicle mounted device 20, and supplies this voltage to each of the sections constituting the vehicle mounted device 20. The internal battery 22 is provided so as to be able to ensure electrical power to an extent to permit communication, even if the supply of power from the vehicle power supply 21 is cut off. Various information that is necessary for the charging process, which will be described later, is held in the storage device 25, such as car owner information, vehicle information including type of vehicle information, balance information read out from an IC card, and card information etc.

An IC card to be inserted into the IC card insertion section 30 is, for example, a contact type IC card, and is internally fitted with an IC chip such as a flash memory or an MPU. As well as card information such as a card ID number, a balance and usage history are stored in this IC card. Information stored in the IC card can be written or read by the control section 26 via the IC card interface 31.

With this type of vehicle mounted device 20, if the IC card is inserted into the IC card insertion section 30, the control section 26 reads out IC card information and a balance that are stored in the IC card via the IC card interface 31 and writes this information to the storage device 25, and temporarily (for example, for about 10 seconds) displays the balance on the display section 28. Also, the control section 26 causes operation of the notification section 29 in order to notify normal operation to the user when it has been possible to read information normally from the IC card. In this way, if the notification section 29 is a buzzer, for example, the buzzer is sounded, or if the notification section 29 is an LED or the like the LED is lit, to give notification of the fact that the situation is normal. On the other hand, in the event that information was not read from the IC card, the control section 26 causes display of indication that there is an error on the display section 28, and by causing operation of the notification section 29 notifies the fact that there is an error to the user, and then prompts for the IC card to be inserted again. Incidentally, the appearance the notification by the notification section 29 takes can be different for normal operation and for abnormal operation.

Next, a description will be given of the operation of the parking fee collection system.

Here, a vehicle 50a will be described as an example.

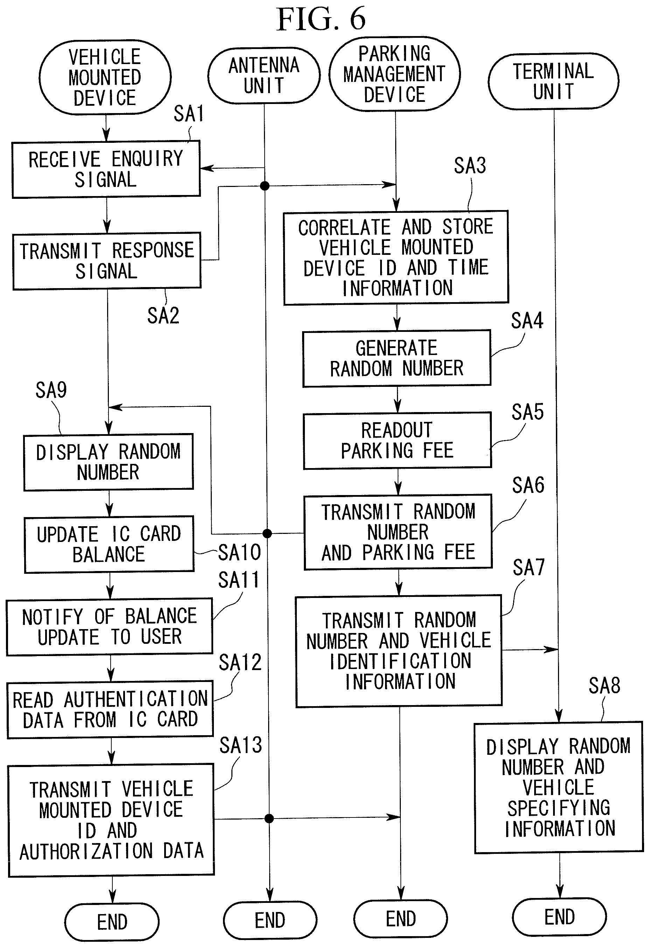

In Fig 1, in the case where the vehicle 50a is parked in the vehicle parking region 3a, for example, the vehicle-mounted device 20 of the vehicle 50a receives an enquiry signal transmitted from the antenna unit 4a (step SA1 in Fig. 6). This enquiry signal includes time information. The vehicle-mounted device 20 transmits a response signal to the antenna unit 4a upon receipt of this enquiry signal (step SA2 in Fig 6). This response signal contains information for specifying the vehicle or the owner of the vehicle (referred to in the following as vehicle mounted device ID) and time information.

Upon receipt of this response signal, the antenna unit 4a transmits the response signal to the car park management apparatus 5. The control unit 18 of the car park management apparatus 5 (refer to Fig. 4) correlates the vehicle mounted device ID, the time information and writes them to the storage device 16 upon receipt of the response signal from the antenna unit 4 (step SA3 in Fig. 6). Next, the control section 18 generates a random number (authentication information) by encrypting the time information received from the antenna unit 4a and identification information for the vehicle parking region 3a are in which the vehicle 50a is parked, using an encryption key (step SA4 in Fig 6). Further, the control section 18 reads out a parking fee corresponding to an initial 30 minutes from a charge table stored in the storage device 16 (step SA5 in Fig. 6). The parking fee and the random number are then transmitted via the antenna unit 4a to the vehicle-mounted device 20 of the vehicle 50a (step SA6 in Fig 6). Also, at this time, the control section 18 of the car park management apparatus 5 correlates this random number with information for specifying the vehicle 50a (referred to as "vehicle identification information" in the following) and transmits them via the communication section 19 to the terminal unit 40 being carried by the attendant A of the car park 1 (step SA7 in Fig 6). Here, the vehicle identification information is assumed to be a number plate of the vehicle 50a or identification information of the vehicle parking region 3a, for example. The terminal unit 40 displays received information (step SA8 in Fig. 6).

On the other hand, upon receipt of the parking fee and the random number, the control section 26 of the vehicle mounted device 20 (refer to Fig 5) displays the random number (step SA9 in Fig.6), and also subtracts a fee of a fixed charge from a balance stored in an IC card and updates and stores this remaining balance as the balance of the IC card (step SA10 in Fig. 6).

Next, in the event that balance update processing is carried out normally, the control section 26 reads the balance after update from the IC card and updates the IC card balance stored in the storage device 25, and also causes operation of the alarm notification section 29 to issue an alarm indicating that fee collection for the initial 30 minutes has been completed normally to the user (step SA11 in Fig. 6). Further, the control section 26 receives authorization data from the IC card (step SA12 in Fig. 6), and correlates the vehicle-mounted device ID with the authorization data for transmission to the antenna section 4a (step SA13 in Fig. 6). Here, the authorization data is information for issuing an alarm indicating the fact that fee collection has been executed normally to the parking management device 5. The antenna section 4a correlates the vehicle mounted device ID and the authorization data and transmits to the parking management device 5. In this way it is possible for the parking management device 5 to confirm that charge processing has been carried out normally.

Also, the parking management device 5 clocks the parking time for the vehicle 50a and executes charging processing every time the parking time reaches 30 minutes based on time information stored in the storage section 16 (refer to Fig 4). Specifically, a parking charge corresponding to the parking time is read out from the charge table, and this parking fee is transmitted to the vehicle mounted device 20 of the vehicle 50a via the antenna unit 4a. In this way, the above described IC card balance update and storing is carried out by the vehicle mounted device 20, and when this balance update processing has been carried out normally, authorization data is transmitted via the antenna section 4a to the parking management device 5.

Also, in the period of time when the vehicle 50a is parked in the car parking region 3a, an attendant A of the car park 1 regularly patrols the parking area 2 to respectively confirm whether or not a random number being displayed on the display section 28 of the vehicle mounted device 20 fitted to each vehicle matches with a random number being displayed on the terminal unit 40 the attendant A is carrying. If the two match in this way it is determined that charging processing has been carried out normally. On the other hand, if the two do not match it is determined that the vehicle is an illegal vehicle, namely that charging processing has not been carried out normally, and levying of a parking fee after the fact is carried out by storing the number plate of the vehicle etc.

Incidentally, in the event that the parking fee is higher than the balance of the IC card, the IC card is not inserted in the IC card insertion section, or the IC card is a counterfeit card etc., it will not be possible to perform collection of a parking fee normally. In this case, it is possible for the control unit 26 of the vehicle mounted device 20 to erase display of the random number on the display section 28. In this way, it is possible for the attendant A to easily ascertain that charge processing has not been carried out normally from the fact that there is no display on the display section 28.

As has been described above, according to the fee collection system, the antenna units 4 are provided in correspondence with the vehicle parking areas 3, and transfer of information is realized between the vehicle mounted devices 20 and the parking management device 5 by means of the antenna units 4, to carry out processing relating to fee collection for parking fees. In this way, there is no longer any need for barriers or the like at entrances and exits of the parking areas, as there was with the related art, and it becomes possible to reduce installation costs. Further, since there is no longer any need to enclose the parking area with railings or walls, it is possible to improve the usage environment by not giving a feeling of being closed in to users, as is the case with a conventional car park.

Still further, in the event that fee collection is carried out normally, a random number is transmitted from the parking management device 5 to the vehicle mounted device 20, which means that an attendant A of the car park 1 can specify vehicles for which fee collection has not been carried out normally by confirming whether or not the random number displayed on the display section 28 of the vehicle mounted device 20 is correct. In this way, it is possible to reliably carry out parking fee collection.

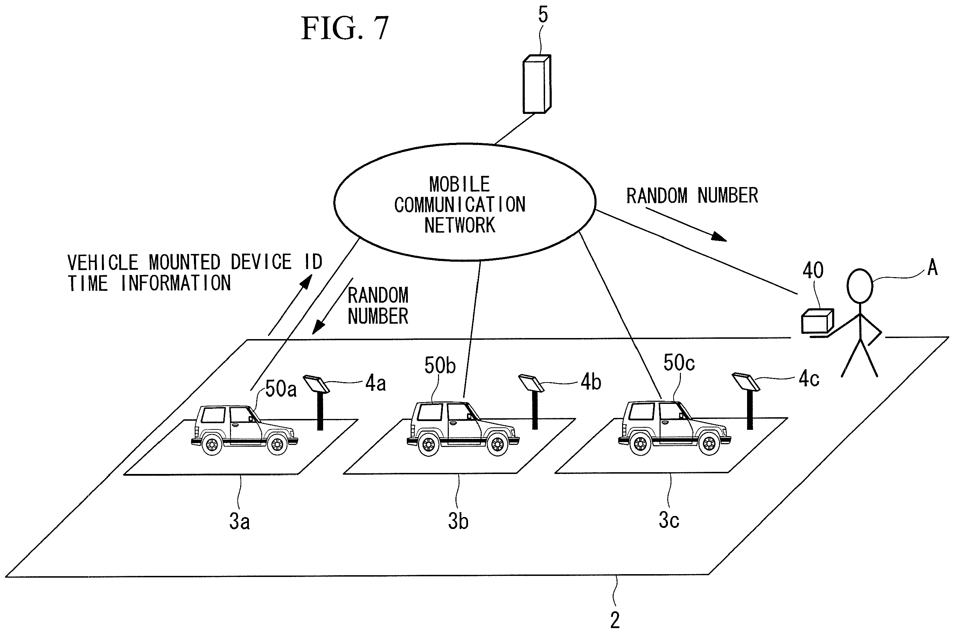

Incidentally, communication between the vehicle mounted device 20 and the parking management device 5 has been carried out via the antenna unit 4, as shown in Fig. 6, but it is also possible, as shown in Fig. 7, to carry out communication between the vehicle mounted device 20 and the parking management device 5 by means of a wide area communication network, such as a mobile communication network. In this case, when the vehicle mounted device 20 has received an enquiry signal from the antenna unit 4, it is automatically connected to the parking management device 5, and transfer of predetermined information relating to fee collection is carried out with the parking management device 5. Incidentally, only the manner of communication between the parking management device 5 and the vehicle-mounted device 20 is different, and the information exchanged between the two is the same as described above.

Next, a fee collection system that is not falling under the scope of the presently claimed invention will be described. The fee collection system is different from the fee collection system of the present invention described above in that instead of the antenna units 4, an entrance antenna unit 35 and exit antenna unit 36 are respectively provided at the entrance and exit of the parking area. The fee collection system will be described below, omitting description of points that are common to the system of the present invention and focusing only on points of difference.

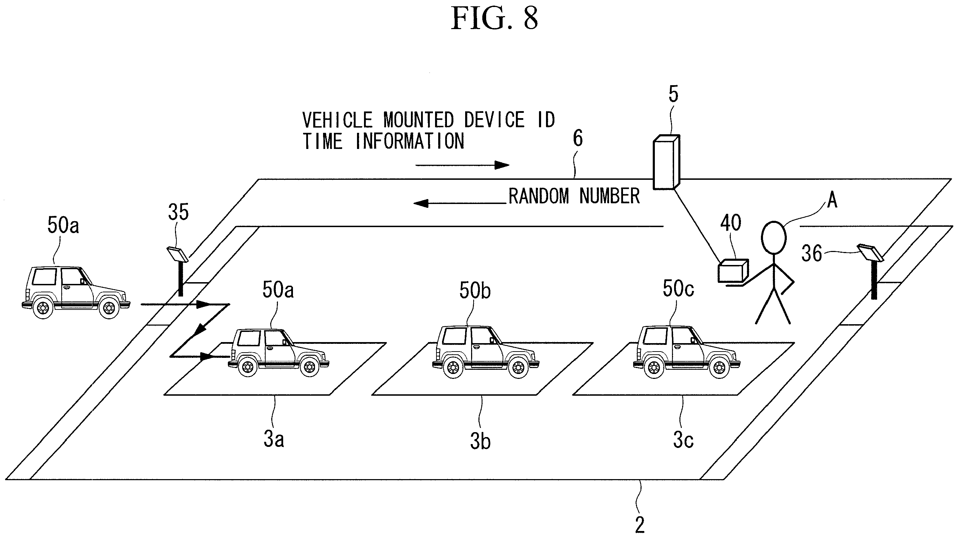

As shown in Fig. 8, the entrance antenna unit 35 is provided at the entrance to the parking area, and the exit antenna unit 36 is provided at the exit of the parking area. The structure of the entrance antenna unit 35 and the exit antenna unit 36 is the same as the above described antenna unit 4.

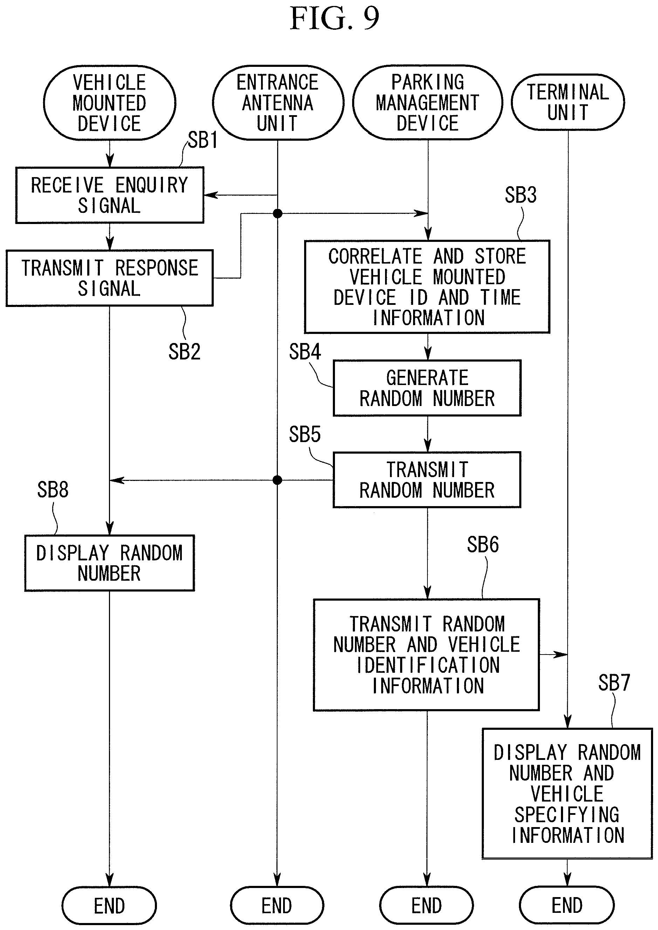

In this type of fee collection system, if a vehicle 50a enters the vicinity of the parking area 2, the vehicle-mounted device 20 of the vehicle 50a receives an enquiry signal transmitted from the entrance antenna unit 35 (step SB1 in Fig. 9). This enquiry signal includes time information. The vehicle-mounted device 20 transmits a response signal to the entrance antenna unit 35 upon receipt of this enquiry signal (step SB2 in Fig 9). Vehicle mounted device ID (vehicle mounted device identification information) and time information are included in this response signal.

Upon receipt of the response signal, the entrance antenna unit 35 transmits the response signal to the parking management device 5. The control unit 18 of the parking management device 5 correlates the vehicle mounted device ID and the time information and writes them to the storage device 16 upon receipt of the response signal from the entrance antenna unit 35 (step SB3 in Fig. 9) Next, the control section 18 generates a random number (authentication information) by encrypting the time information received from the entrance antenna unit 35 using an encryption key (step SB4 in Fig. 9). The random number is then transmitted to the vehicle mounted device 20 via the entrance antenna unit 35 (step SB5 in Fig. 9). Also, at this time, the control section 18 of the parking management device 5 correlates this random number with vehicle identification information, and transmits them via the communication section 19 to the terminal unit 40 being carried by the attendant A of the parking area 1 (step SB6 in Fig. 9). The terminal unit 40 displays received information (step SB7 in Fig. 9).

On the other hand, upon receipt of the random number, the control section 26 of the vehicle mounted device 20 displays this random number of the display section 28 (step SB8 in Fig. 9). If the driver of the vehicle confirms that the random number is displayed on the display section 28, the vehicle enters the parking area 2, parks in an arbitrary vehicle parking region 3a, and gets out of the vehicle.

In the period of time that the vehicle 50a is parked in the car parking region 3a, an attendant A of the car park 1 regularly patrols the parking area 2 to confirm whether or not a random number being displayed on the display section 28 of the vehicle mounted device 20 matches with a random number being displayed on the terminal unit 40 the attendant is carrying. If the two match in this way it is determined that charging processing has been carried out normally. On the other hand, if the two do not match it is determined that the vehicle is an illegally- parked vehicle, namely that charging processing has not been carried out normally, and levying of a parking fee after the fact is carried out by the attendant A storing the number plate of the vehicle etc.

Next, the situation where the vehicle leaves the parking area 2 will be described.

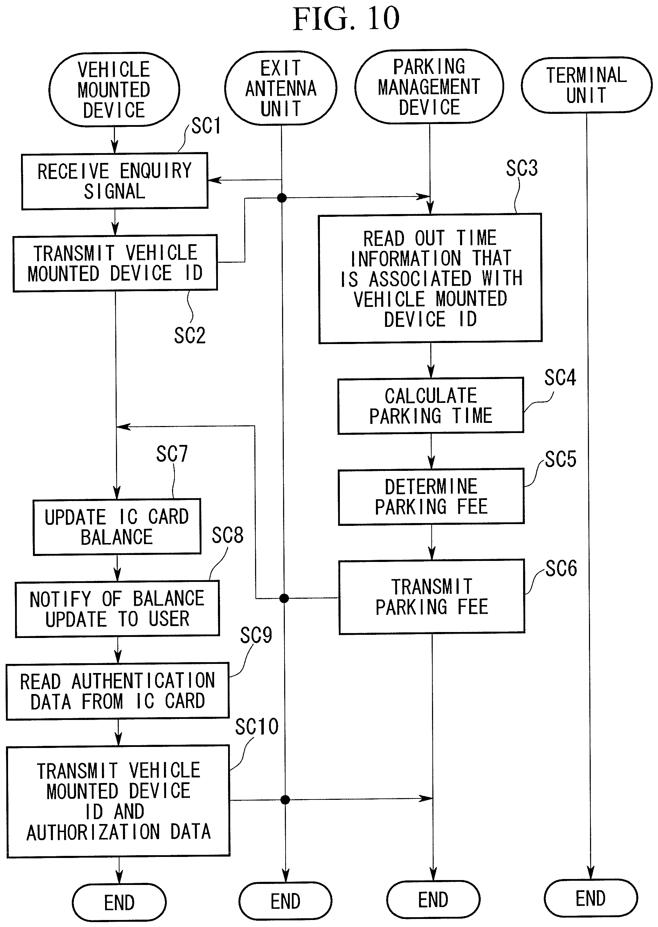

In this case, the driver moves the vehicle 50a into a region where communication with the exit antenna unit 36 is possible. The exit antenna unit 36 emits an inquiry signal, and upon receipt of this enquiry signal (step SC1 in Fig 10) the vehicle mounted device 20 transmits a vehicle mounted device ID to the exit antenna unit 36 (step SC2 in Fig. 10). The exit antenna unit 36 then transmits the received vehicle mounted device ID to the parking management device 5. Once the parking management device 5 received the vehicle-mounted device ID, time information that is associated with this vehicle-mounted device ID, namely the parking start time of the vehicle, is read out (step SC3 in Fig. 10), and a parking time is calculated from this time and the current time (step SC4 in Fig. 10). Then, referring to a charge table, a parking fee for the parking time is determined (step SC5 in Fig. 10). This parking fee is then transmitted to the vehicle-mounted device 20 via the exit antenna unit 36 (step SC6 in Fig. 10).

If the control section 26 of the vehicle mounted device 20 receives this parking fee, a fixed rate fee is deducted from the balance stored in the IC card, and this balance is updated and stored in the IC card as a new balance (step SC7 in Fig. 10). Next, in the event that balance update processing is carried out normally, the control section 26 reads the balance after update from the IC card and updates the IC card balance stored in the storage device 25, and also causes operation of the alarm notification section 29 to issue an alarm indicating that collection of a parking fee has been completed normally to the user (step SC8 in Fig. 10). Further, the control section 26 receives authorization data from the IC card (step SC9 in Fig. 10), and correlates the vehicle-mounted device ID with the authorization data for transmission to the exit antenna unit 36 (step SC10 in Fig. 10). The exit antenna unit 36 correlates the vehicle mounted device ID and the authorization data and transmits to the parking management device 5. In this way, it is possible for the parking management device 5 to confirm that charge processing has been carried out normally.

As has been described above, according to the fee collection device, it is sufficient to have two antenna units, namely the entrance antenna unit 35 and the exit antenna unit 36, which means that it becomes possible to significantly reduce the number of structural components of the fee collection system. It is possible in this way to reduce the installation costs.

Incidentally, in the case where the vehicle mounted device 20 enters a parking area 2 where communication with the entrance antenna unit 35 can not be carried out, then since a random number will not be displayed on the display section 28 of the vehicle mounted device 20 it is possible for the attendant A to easily determine that the vehicle is illegal. Also, in the event that the vehicle leaves the car park 1 without passing through the exit of the car park 1, authorization data indicating that charge processing has been carried out normally will not have been transmitted to the parking management device 5, and so it can be detected that there is an illegal vehicle. For example, the parking management device 5 periodically detects vehicles, among the vehicles for which authorization data has not been received, whose parking time has reached a predetermined time (for example, 24 hours), and considers these vehicles to be illegal vehicles and transmits their vehicle identification information to the terminal unit 40 of the Attendant A. In this way, even in the event that a vehicle leaves the parking area 2 without paying a parking fee, since the identification information for each vehicle is stored in the parking management device 5 it is possible to levy a parking fee after the fact.

Next, a parking fee collection system of an embodiment of the present invention will be described.

The parking fee collection system of this embodiment differs in that communication between the vehicle mounted device 20 and the parking management device 5 is carried out directly via the wide area communication network, and entry into or departure from the car parking region 3 is detected according to whether or not an inquiry signal has been received from the antenna unit 4.

The structure of this embodiment is substantially the same as the system structure shown in Fig. 7, so description will be given with reference to Fig. 7.

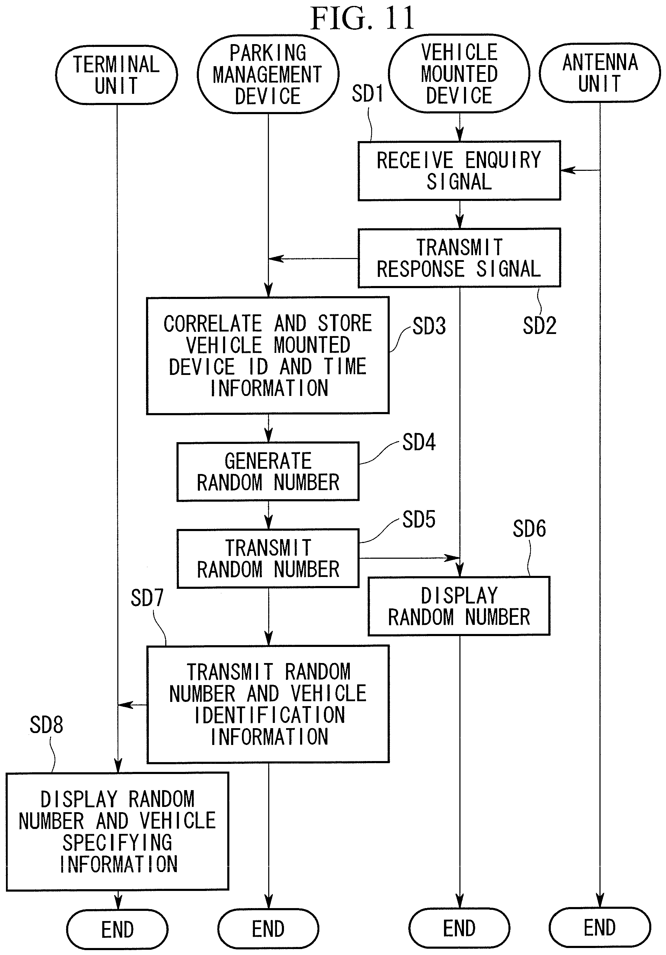

In the fee collection system of this embodiment, as shown in Fig. 7, if a vehicle 50a is parked in the vehicle parking region 3a, the vehicle mounted device 20 of the vehicle 50a receives an enquiry signal transmitted from the antenna unit 4a (step SD1 in Fig. 11). This enquiry signal includes time information. The vehicle mounted device 20 is connected to the parking management device 5 via the mobile communication network upon receipt of this enquiry signal, and transmits a response signal (step SD2 in Fig 11). Vehicle mounted device ID and time information received from the antenna unit 4a, for example, are contained in this response signal.

The control unit 18 of the parking management device 5 correlates the vehicle mounted device ID and the time information and writes them to the storage device 16, upon receipt of the response signal via the mobile communication network (step SD3 in Fig. 11) .Next, the control section 18 generates a random number (authentication information) by encrypting this time information using an encryption key (step SD4 in Fig 11). The random number is then transmitted to the vehicle-mounted device 20 via the mobile communication network (step SD5 in Fig. 11). The vehicle-mounted device 20 displays the received random number of a display section 28 (step SD6 in Fig. 11). Also, the control section 18 of the parking management device 5 correlates this random number with vehicle identification information, and transmits them via the mobile communication network to the terminal unit 40 being carried by the attendant A of the car park 1 (step SD7 in Fig 11). The terminal unit 40 displays received information (step SD8 in Fig. 11).

Next, the situation where there is a departure from the parking area 2 will be described.

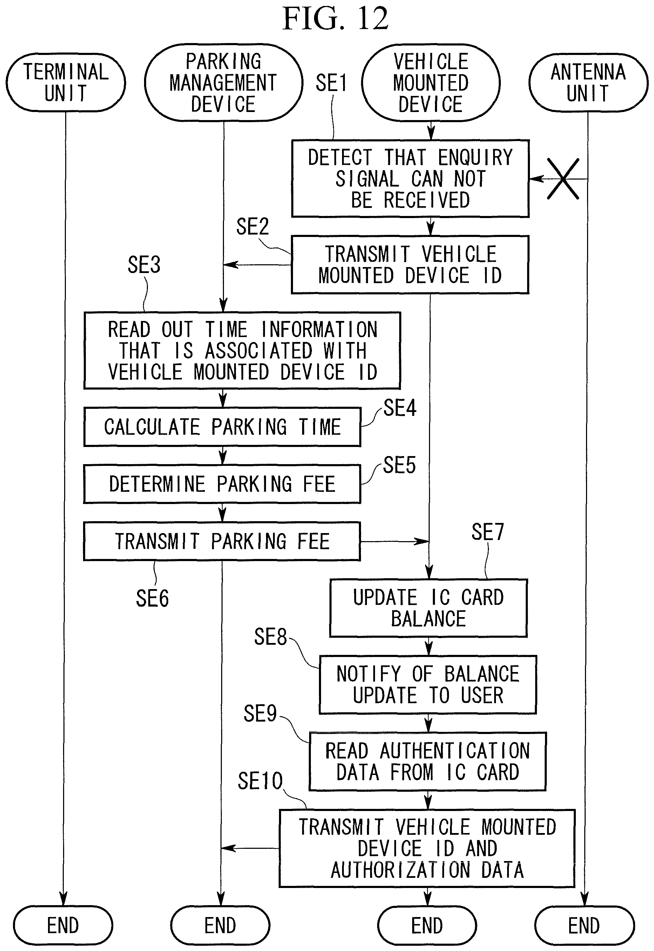

In this case, if the driver causes the vehicle 50a to leave from the parking region 3a, the vehicle-mounted device 20 enters a state where it cannot receive an inquiry signal from the antenna section 4a. Upon detecting that it is no longer possible to receive the inquiry signal from the antenna unit 4a (step SE1 in Fig. 12), the vehicle mounted device 20 is connected to the parking management device 5 via the mobile communication network, and transmits a vehicle mounted device ID to the vehicle management device 5 (step SE2 in Fig. 12). Once the parking management device 5 receives the vehicle mounted device ID, time information that is associated with this vehicle mounted device ID, namely the parking start time of the vehicle, is read out (step SE3 in Fig. 12), and a parking time is calculated from this time and the current time (step SE4 in Fig. 12). Then, referring to a charge table, a parking fee for the parking time is determined (step SE5 in Fig. 12). This parking fee information is then transmitted to the vehicle-mounted device 20 (step SE6 in Fig. 12).

If the control section 26 of the vehicle mounted device 20 receives this parking fee from the parking management device 5, a fixed rate fee is deducted from the balance stored in the IC card, and this balance is updated and stored in the IC card as a new balance (step SE7 in Fig. 12). Next, in the event that balance update processing is carried out normally, the control section 26 reads the balance after update from the IC card and updates the IC card balance stored in the storage device 25, and also causes operation of the alarm notification section 29 to issue an alarm indicating that collection of a parking fee has been completed normally to the user (step SE8 in Fig. 12). Further, the control section 26 receives authorization data from the IC card (step SE9 in Fig. 12), and correlates the vehicle-mounted device ID with the authorization data for transmission to the parking management device 5 (step SE10 in Fig. 12). In this way it is possible for the parking management device 5 to confirm that charge processing has been carried out normally.

As has been described above, according to the fee collection system of this embodiment, antenna units 4 are provided corresponding to the vehicle parking regions 3, and it is possible to easily determine vehicles entering or leaving the vehicle parking area 3 from whether or not it is possible to receive an enquiry signal from the antenna units 4. Also, processing related to fee collection for parking fees is realized by directly exchanging information between vehicle mounted device 20 and the parking management device 5.

Incidentally, in the above described embodiment, entry into the vehicle parking region 3 is detected using the fact that an inquiry signal is received from the antenna unit 4, and also departure from the vehicle parking region 3 is detected using the fact that an enquiry signal can no longer be received from the antenna unit 4. Instead of this method, it is possible to detect entry into and departure out of the vehicle parking region 3 based on position information, as described in the following.

In this case, the vehicle mounted device 20 is equipped with a GPS receiver, and map information of the parking area 2 is stored in the storage device 25. The control section 26 of the vehicle mounted device 20 detects entry into the parking area 2 when current position acquired using the GPS receiver matches map information of the parking area stored in the storage device 25, and detects leaving of the parking area 2 when the current position is out of the parking area 2.

By detecting entry into the parking area 2 and departure from the parking area 2 based on current position information acquired using the GPS receiver in this way, the antenna unit 4 installed in each vehicle parking region 3 is no longer required. It is possible in this way to further reduce the installation costs.

According to the claimed invention, the random number is periodically updated. By periodically updating the random number in this way, it is possible to strengthen supervision of illegal vehicles for which fee collection is not carried out normally. Further according to the present invention, when there are a plurality of vehicles in the parking area 2, the same random number is periodically transmitted simultaneously to the vehicle mounted devices 20 of all vehicles under the supervision of the parking management device 5. In this way, for vehicles for which fee collection has been carried out normally, the same random number is displayed on the vehicle mounted device 20, and so it is possible to easily specify illegal vehicles without the attendant A having to compare random numbers displayed on the terminal unit 40. In this case, it is also possible to not transmit the random number to the terminal unit 40. Instead of this claimed arrangement, it is also possible to transmit individual random numbers to vehicle mounted devices 20 of individual vehicles and to transmit a random number correlated to each vehicle identification information to the terminal unit 40 carried by the attendant A.

Further, instead of the display on the display section 28, it is possible to provide light emitting elements such as LEDs (lighting section) and flash this light emitting element at a timing based on the random number. By causing the LEDs in vehicles for which fee collection has been carried out normally to flash together at a predetermined timing in this way, it is possible for the attendant A to easily specify illegal vehicles.

Also a case of collecting a parking fee from an IC card inserted into a vehicle mounted device 20 has been described, but instead of this method of fee collection it is also possible to register a user's bank account in advance and automatically deduct parking fees from that bank account.

Also, with respect to detection of position information using the GPS receiver described above, it is also possible to correct the current position acquired using the GPS receiver using information such as vehicle speed pulses detected by a vehicle speed sensor mounted on the vehicle, or a gyro. In this way, it is possible to further improve accuracy of position detection.

Incidentally, the above-described can be combined wherever possible. For example, it is possible to detect entry into the parking area 2 from the fact that communication is carried out with an entrance antenna section 35 installed at the entrance, and on the other hand, detect leaving of the parking area 2 based on a GPS receiver and map information, for example.

Also, the above has been described with a non-contact type IC card as one example, but it is also possible to use a contact IC card instead.

## Claims

1. A fee collection device, comprising
antennas (4a, 4b, 4c), provided in correspondence with a plurality of vehicle parking regions (3) provided in a parking area, for emitting an enquiry signal toward the vehicle parking regions,
a terminal unit (40) configured to be carried by an attendant of the car park; and
a parking management device (5) for exchanging information with vehicle mounted devices (20) of vehicles parked in the vehicle parking regions, wherein
the parking management device (5) is configured so as to correlate and store information relating to the vehicles with parking start time, and to levy parking fees at predetermined time intervals, when information relating to the vehicles, transmitted from vehicle mounted devices (20) that have received the enquiry signal, is received; **characterised in that** the parking management device (5) is further configured to periodically generate a random number as an authentication information indicating that a parking fee has been levied normally, and to periodically transmit, for displaying in the vehicle mounted devices, the random number to the vehicle mounted devices (20) of the vehicles for which a parking fee has been levied normally, and the parking management device (5) is further configured to correlate the random number with information for identifying the vehicle mounted devices (20) and to transmit the correlated information to the terminal unit (40), and
the terminal unit (40) is configured to display the random number received from the parking management device (5).

2. The fee collection device of claim 1, wherein a stanchion is arranged close to the car parking regions, and the antennas (4) are attached to the stanchion so as to substantially align their own wireless communication regions with the car parking regions.

3. The fee collection device of claim 1 or claim 2, configured so that information can be exchanged between the vehicle mounted devices (20) and the parking management device (5) by means of the antennas (4).

4. The fee collection device of any one of claim 1 to claim 3, configured so that information is exchanged between the vehicle mounted devices (20) and the parking management device (5) by means of a wide area communication network.

5. A fee collecting system comprising:
the fee collection device of any one of claim 1 to claim 4, and at least one vehicle mounted device (20), wherein each of the vehicle mounted devices (20) comprises
a communication section (27) for receiving of the random number transmitted from the parking management device (5); and
a display section (28), for displaying random number, when the random number is received by the communication section (27).

6. A fee collecting system comprising:
the fee collection device of any one of claim 1 to claim 4, and at least one vehicle mounted device (20), wherein each of the vehicle mounted devices (20) comprises
a communication section (27) for receiving of the random number transmitted from the parking management device (5); and
a lighting section configured to be flashed at a timing corresponding to the random number, when the random number is received by the communication section (27).

## Patentansprüche

1. Gebührensammelvorrichtung, aufweisend:
Antennen (4a, 4b, 4c), die korrespondierend zu einer Vielzahl von Fahrzeugparkbereichen (3), die in einem Parkgebiet vorgesehen sind, zum Emittieren eines Anfragesignals zu den Fahrzeugparkbereichen vorgesehen sind,
eine Terminaleinheit (40), die konfiguriert ist, um durch einen Aufseher des Parkplatzes ausgeführt zu werden; und
eine Parkverwaltungsvorrichtung (5) zum Austauschen von Informationen mit fahrzeugmontierten Vorrichtungen (20) von in den Fahrzeugparkbereichen geparkten Fahrzeugen, wobei
die Parkverwaltungsvorrichtung (5) konfiguriert ist, um Informationen bezogen auf die Fahrzeuge mit einer Parkbeginnzeit zu korrelieren und zu speichern, und um Parkgebühren zu vorbestimmten Zeitintervallen zu erheben, wenn Informationen bezogen auf die Fahrzeuge empfangen sind, die von den fahrzeugmontierten Vorrichtungen (20), die das Anfragesignal empfangen haben, übertragen sind,
**dadurch gekennzeichnet, dass**
die Parkverwaltungsvorrichtung (5) ferner konfiguriert ist, um eine Zufallszahl als Authentifizierungsinformationen, die anzeigen, dass eine Parkgebühr normal erhoben worden ist, periodisch zu erzeugen, und um zum Anzeigen in den fahrzeugmontierten Vorrichtungen die Zufallszahl an die fahrzeugmontierten Vorrichtungen (20) der Fahrzeuge, für welche eine Parkgebühr normal erhoben worden ist, periodisch zu übertragen, und
die Parkverwaltungsvorrichtung (5) ferner konfiguriert ist, um die Zufallszahl mit Informationen zum Identifizieren der fahrzeugmontierten Vorrichtungen (20) zu korrelieren, und um die korrelierten Informationen zu der Terminaleinheit (40) zu übertragen, und
die Terminaleinheit (40) konfiguriert ist, um die von der Parkverwaltungsvorrichtung (5) empfangene Zufallszahl anzuzeigen.

2. Gebührensammelvorrichtung nach Anspruch 1, wobei ein Pfosten in der Nähe der Fahrzeugparkbereiche angeordnet ist, und die Antennen (4) an dem Pfosten angebracht sind, so dass sie im Wesentlichen ihre eigenen drahtlosen Kommunikationsbereiche mit den Fahrzeugparkbereichen ausrichten.

3. Gebührensammelvorrichtung nach Anspruch 1 oder 2, so konfiguriert, dass Informationen zwischen den fahrzeugmontierten Vorrichtungen (20) und der Parkverwaltungsvorrichtung (5) mittels der Antennen (4) ausgetauscht werden können.

4. Gebührensammelvorrichtung nach einem der Ansprüche 1 bis 3, so konfiguriert, dass Informationen zwischen den fahrzeugmontierten Vorrichtungen (20) und der Parkverwaltungsvorrichtung (5) mittels eines Weitverkehrskommunikationsnetzwerks ausgetauscht werden können.

5. Gebührensammelsystem, aufweisend:
die Gebührensammelvorrichtung nach einem der Ansprüche 1 bis 4, und zumindest eine fahrzeugmontierte Vorrichtung (20), wobei jede der fahrzeugmontierten Vorrichtungen (20) aufweist:
einen Kommunikationsabschnitt (27) zum Empfangen der von der Parkverwaltungsvorrichtung (5) übertragenen Zufallszahl; und
einen Anzeigeabschnitt (28) zum Anzeigen der Zufallszahl, wenn die Zufallszahl durch den Kommunikationsabschnitt (27) empfangen ist.

6. Gebührensammelsystem, aufweisend:
die Gebührensammelvorrichtung nach einem der Ansprüche 1 bis 4, und zumindest eine fahrzeugmontierte Vorrichtung (20), wobei jede der fahrzeugmontierten Vorrichtungen (20) aufweist:
einen Kommunikationsabschnitt (27) zum Empfangen der von der Parkverwaltungsvorrichtung (5) übertragenen Zufallszahl; und
einen Beleuchtungsabschnitt, der konfiguriert ist, um zu einer Zeitsteuerung korrespondierend zu der Zufallszahl beleuchtet zu werden, wenn die Zufallszahl durch den Kommunikationsabschnitt (27) empfangen ist.

## Revendications

1. Dispositif de collecte de droits, comprenant des antennes (4a, 4b, 4c), prévues en correspondance avec une pluralité de régions de stationnement de véhicules (3) prévues dans une zone de stationnement, pour émettre un signal d'interrogation vers les régions de stationnement de véhicules,
une unité de terminal (40) configurée pour être portée par un préposé du parc de stationnement ; et
un dispositif de gestion de stationnement (5) pour échanger des informations avec des dispositifs montés sur véhicule (20) de véhicules stationnés dans les régions de stationnement de véhicules, dans lequel
le dispositif de gestion de stationnement (5) est configuré de façon à corréler et stocker des informations relatives aux véhicules avec un instant de début de stationnement, et pour prélever des droits de stationnement à des intervalles de temps prédéterminés, lorsque des informations relatives aux véhicules, transmises depuis des dispositifs montés sur véhicule (20) qui ont reçu le signal d'interrogation, sont reçues ; **caractérisé en ce que**
le dispositif de gestion de stationnement (5) est en outre configuré pour générer périodiquement un nombre aléatoire en tant qu'informations d'authentification indiquant qu'un droit de stationnement a été prélevé normalement, et pour transmettre périodiquement, pour un affichage dans les dispositifs montés sur véhicule, le nombre aléatoire aux dispositifs montés sur véhicule (20) des véhicules pour lesquels un droit de stationnement a été prélevé normalement, et
le dispositif de gestion de stationnement (5) est en outre configuré pour corréler le nombre aléatoire avec des informations pour identifier les dispositifs montés sur véhicule (20) et pour transmettre les informations corrélées à l'unité de terminal (40), et
l'unité de terminal (40) est configurée pour afficher le nombre aléatoire reçu en provenance du dispositif de gestion de stationnement (5).

2. Dispositif de collecte de droits selon la revendication 1, dans lequel un poteau est agencé près des régions de stationnement de véhicules, et les antennes (4) sont attachées au poteau de façon à aligner sensiblement leurs propres régions de communication sans fil avec les régions de stationnement de véhicules.

3. Dispositif de collecte de droits selon la revendication 1 ou la revendication 2, configuré de sorte que des informations puissent être échangées entre les dispositifs montés sur véhicule (20) et le dispositif de gestion de stationnement (5) au moyen des antennes (4).

4. Dispositif de collecte de droits selon l'une quelconque des revendications 1 à 3, configuré de sorte que des informations soient échangées entre les dispositifs montés sur véhicule (20) et le dispositif de gestion de stationnement (5) au moyen d'un réseau de communication étendu.

5. Système de collecte de droits comprenant :
le dispositif de collecte de droits de l'une quelconque des revendications 1 à 4, et au moins un dispositif monté sur véhicule (20), dans lequel chacun des dispositifs montés sur véhicule (20) comprend
une section de communication (27) pour recevoir le nombre aléatoire transmis depuis le dispositif de gestion de stationnement (5) ; et
une section d'affichage (28), pour afficher le nombre aléatoire, lorsque le nombre aléatoire est reçu par la section de communication (27).

6. Système de collecte de droits comprenant :
le dispositif de collecte de droits de l'une quelconque des revendication 1 à 4, et au moins un dispositif monté sur véhicule (20), dans lequel chacun des dispositifs montés sur véhicule (20) comprend
une section de communication (27) pour recevoir le nombre aléatoire transmis à partir du dispositif de gestion de stationnement (5) ; et
une section d'éclairage configurée pour clignoter à un moment correspondant au nombre aléatoire, lorsque le nombre aléatoire est reçu par la section de communication (27).
